# EUROPÄISCHE PATENTANMELDUNG

(11) **EP 3 315 729 A1**
(43) Veröffentlichungstag der Anmeldung: **02.05.2018**
(21) Anmeldenummer: 16195816.0
(22) Anmeldetag: 26.10.2016
(51) Int. Cl.: F01D 9/04, F01D 17/16, F04D 29/56

(54) **ELLIPSOIDISCHE INNERE LEITSCHAUFELLAGERUNG**

(71) Anmelder: MTU Aero Engines AG, 80995 München (DE)
(72) Erfinder: Wulf, Joachim, 80634 München (DE); Langholf, Philipp, 85716 Unterschleißheim (DE); Hein, Manuel, 85757 Karlsfeld (DE)

(57) **Zusammenfassung**

Ein erfindungsgemäßer Innenring (10) bzw. ein erfindungsgemäßes Innenringsegment (10') für einen verstellbaren Leitschaufelkranz (1) umfasst eine Mehrzahl an Aufnahmen (11, 11') jeweils zur Lagerung einer verstellbaren Leitschaufel (20, 20', 20", 20'"). Die Aufnahmen bilden dabei jeweils einen im Wesentlichen ellipsoidisch geformten Aufnahmeraum (12) für einen Leitschaufelkopf (22, 22', 22", 22'") der jeweiligen Leitschaufel aus.

Eine erfindungsgemäße Leitschaufel (20, 20', 20", 20"') für einen verstellbaren Leitschaufelkranz (1) weist ein Schaufelblatt (21, 21', 21", 21'") und einen Leitschaufelkopf (22, 22', 22", 22'") auf. Der Leitschaufelkopf ist im Wesentlichen ellipsoidisch ausgebildet und dazu eingerichtet, verschwenkbar in einer Aufnahme (11, 11') eines Innenrings (10) bzw. Innenringsegments (10') des Leitschaufelkranzes (1) aufgenommen zu werden.

## Beschreibung

Die Arbeiten, die zu dieser Erfindung geführt haben, wurden gemäß der Finanzhilfevereinbarung Nr. CSJU-GAM-SAGE-2008-001 im Zuge des Siebten Rahmenprogramms der Europäischen Union (*FP7*/*2007-2013*) für Clean Sky Joint Technology Initiative gefördert.

Die vorliegende Erfindung betrifft einen Innenring für einen verstellbaren Leitschaufelkranz, ein Innenringsegment für einen derartigen Innenring, eine Leitschaufel, einen Leitschaufelkranz und eine Strömungsmaschine.

Strömungsmaschinen wie Flugzeugtriebwerke und stationäre Gasturbinen haben zur Einstellung optimaler Betriebsbedingungen häufig mindestens einen Leitschaufelkranz. Dieser umfasst einen Innenring und eine Mehrzahl an Leitschaufeln, deren eines Ende am Innenring angeordnet ist und die sich von diesem ausgehend radial nach außen erstrecken; die Bezeichnungen "radial", "axial" und "in Umfangsrichtung" beziehen sich in dieser Schrift - sofern nichts anderes angegeben ist - stets auf eine zentrale geometrische Achse des Leischaufelkranzes bzw. des Innenrings, was zur besseren Lesbarkeit nicht immer extra ausformuliert ist.

Ein derartiger Leitschaufelkranz kann insbesondere verstellbar ausgebildet sein: In diesem Falle sind die Leitschaufeln um eine vorgesehene Verschwenkungsachse verschwenkbar, die im Allgemeinen mit einer Längsachse der Leitschaufeln übereinstimmt und im Wesentlichen radial verläuft.
Die Verschwenkung kann über äußere Verstellkomponenten an den Leitschaufeln, insbesondere mittels Verstellzapfen erfolgen, die in zugehörige Aufnahmen des Gehäuses eingesetzt bzw. einzusetzen sind und die dann mit einer entsprechenden Verstelleinrichtung am äußeren Gehäuse zusammenwirken können.

Eine innere Stabilisierung der Leitschaufeln erfolgt bei bekannten Leitschaufelkränzen häufig über Lagerzapfen, die sich von einem jeweiligen Leitschaufelteller radial nach innen erstrecken und die in Lagerbuchsen des Innenrings geführt sein können.

Gerade bei relativ kleinen Strömungsmaschinen können bei einer Leitschaufelkranzkonzeption, die Leitschaufeln mit Leitschaufeltellern und Lagerzapfen vorsieht, aufgrund des geringen Bauraumvolumens gemeinhin nur relativ wenige Leitschaufeln vorgesehen werden. Zudem haben die zugehörigen Innenringe eine relativ große radiale Dicke, was bei gegebenem Gehäusedurchmesser entsprechend kurze Leitschaufeln und damit eine kleine aerodynamische Wirkfläche bedingt. Da die Effizienz des Leitschaufelkranzes aus diesen Gründen eingeschränkt ist, bestehen Bestrebungen, insbesondere bei Kleinverdichtern andere Lagerungsmöglichkeiten für Leitschaufeln vorzusehen. Darüber hinaus ist es ein grundsätzliches Anliegen bei der Konstruktion von Leitschaufelkränzen, Leckageströmungen zu minimieren, die im Bereich der Lagerung auftreten und den Wirkungsgrad der jeweiligen Strömungsmaschine erheblich beeinträchtigen können. Insbesondere kann eine resultierende Wiedereinströmung zu einer Störung des Hauptgasstromes und damit zu Strömungsverlusten führen. Eine derartige Leckage kann beispielsweise durch Spalte begünstigt werden, die durch Verschleiß in Aufnahmen und/oder Buchsen für die Lagerzapfen entstehen.

Aus der EP 2 955 335 A1 ist ein verstellbarer Leitschaufelkranz zur Verwendung in einem geometrisch kleinen Verdichter bekannt. Die Leitschaufeln des Leitschaufelkranzes sind dabei unmittelbar über ihre radial inneren Schaufelteller im Innenring gelagert.

In der wird EP 2 884 055 A1 wird zur Minimierung einerseits des Bauraums und andererseits von Leckageströmungen ein Innenring mit darin gelagerten Leitschaufeln vorgeschlagen, bei dem wenigstens eine der Leitschaufeln eine radial innen angeordnete Gleitfläche aufweist, die im Wesentlichen senkrecht zur radial verlaufenden Längsachse der Leitschaufel ausgebildet ist. Insbesondere kann das radial innere Ende der Leitschaufel die Form eines Kegelstumpfes aufweisen.

Die vorliegende Erfindung hat die Aufgabe, eine alternative Technik zur radial inneren Lagerung von Leitschaufeln bereitzustellen, die sich insbesondere für relativ kleine Strömungsmaschinen eignet. Die Erfindung hat zudem die Aufgabe, eine einfache Einfädelung von Leitschaufeln in Aufnahmen eines Innenrings zu ermöglichen, wobei ein Lagerungsbereich der Leitschaufeln möglichst eng an einer Aufnahmewandung anliegt.

Die Aufgaben werden gelöst durch einen Innenring gemäß Anspruch 1, ein Innenringsegment gemäß Anspruch 5, eine Leitschaufel gemäß Anspruch 6, einen Leitschaufelkranz gemäß Anspruch 9 und eine Strömungsmaschine gemäß Anspruch 10. Vorteilhafte Ausführungsformen sind in den Unteransprüchen, der Beschreibung und den Figuren offenbart.

Ein erfindungsgemäßer Innenring für einen verstellbaren Leitschaufelkranz umfasst (an seiner radial äußeren Oberfläche) eine Mehrzahl an Aufnahmen jeweils zur Lagerung einer verstellbaren (also verschwenkbaren) Leitschaufel. Die Aufnahmen bilden jeweils einen im Wesentlichen ellipsoidisch geformten, d.h. durch einen Teil einer Ellipsoidoberfläche begrenzten Aufnahmeraum für einen Leitschaufelkopf einer jeweiligen Leitschaufel aus (also für einen radial innen zu positionierenden Endabschnitt der Leitschaufel); der ellipsoidische Aufnahmeraum kann dabei lediglich ein Teil eines inneren Volumens der jeweiligen Aufnahme sein. Eine Wandung des Aufnahmeraums verläuft also in dem Abschnitt entlang der Oberfläche eines (abstrakten) Ellipsoids. Insbesondere kann der Aufnahmeraum somit die Form eines Ellipsoidsegments haben (also eines Teils eines Ellipsoids, der sich aus dessen Schnitt mit einer Ebene ergibt). Gemäß einem speziellen vorteilhaften Ausführungsbeispiel ist das Ellipsoid eine Kugel, der Aufnahmeraum also im Wesentlichen kugelig, z.B. wie ein Kugelsegment geformt.

Eine erfindungsgemäße Leitschaufel für einen verstellbaren Leitschaufelkranz weist (insbesondere) ein Schaufelblatt und einen Leitschaufelkopf auf (also einen radial innen zu positionierenden Endabschnitt). Der Leitschaufelkopf ist dabei dazu eingerichtet, verschwenkbar in einer Aufnahme eines Innenrings aufgenommen zu werden, so dass also die Leitschaufel mittels des Leitschaufelkopfes im Innenring gelagert werden kann. Der Leitschaufelkopf ist dabei im Wesentlichen ellipsoidisch ausgebildet, hat also einen Oberflächenbereich, der mit einem Teil der Oberfläche eines Ellipsoids übereinstimmt. Insbesondere kann der Leitschaufelkopf die Form eines Ellipsoidsegments haben. Gemäß einem speziellen vorteilhaften Ausführungsbeispiel ist das Ellipsoid eine Kugel, der Leitschaufelkopf also im Wesentlichen kugelig, z.B. als Kugelsegment ausgebildet. Vorzugsweise bildet der Leitschaufelkopf den gesamten Abschnitt der Leitschaufel, der dazu eingerichtet ist, in einer Aufnahme eines Innenrings versenkt zu werden.

Ein erfindungsgemäßer Innenring und eine erfindungsgemäße Leitschaufel ermöglichen jeweils eine robuste, kompakte und verschleißarme innere Leitschaufellagerung bei einem verstellbaren Leitschaufelkranz. Insbesondere ermöglicht die ellipsoidische Form des Aufnahmeraums bzw. des Leitschaufelkopfes eine relativ geringe radiale Dicke des Innenrings, was auch bei kleinem Bauraum bzw. bei kleinem Gehäuse eine Anordnung einer relativ großen Anzahl an relativ langen Leitschaufeln am Innenring ermöglicht. So kann auch in einem kleinen Verdichter bzw. einer kleinen Turbine ein vorteilhafter Wirkungsgrad erreicht werden.

Zudem ermöglicht die im Wesentlichen ellipsoidische und damit kantenfreie Form ein einfaches Einsetzen des jeweiligen Leitschaufelkopfes in eine Aufnahme, bei dem Beschädigungen vermieden werden können. Ein Zwischenraum zwischen Leitschaufelkopf und einer Wandung der Aufnahme (der auch als "Pennyspalt" bezeichnet wird) kann daher optimal klein konzipiert werden, was die Leckage in diesem Bereich minimiert.

Ein erfindungsgemäßer Innenring kann in Umfangsrichtung ungeteilt oder geteilt sein; im letzteren Fall ist er also aus zwei oder mehr Innenringsegmenten zusammengesetzt, beispielsweise aus zwei Ringhälften jeweils mit einem Achsenwinkel (an der zentralen Achse) von 180°. Zum Einsetzen der Leitschaufeln können diese radial außen am Gehäuse befestigt werden. Das Innenringsegment kann dabei dazu eingerichtet sein, verformt und auf den Leitschaufelköpfen der Leitschaufeln abgewälzt werden, so dass also die Leitschaufelköpfe in Umfangsrichtung des Innenringsegments mindestens in einem Abschnitt nacheinander in die jeweiligen Aufnahmen eintreten können.

Ein erfindungsgemäßes Innenringsegment ist dazu eingerichtet, mit mindestens einem anderen Innenringsegment zu einem erfindungsgemäßen Innenring gemäß einer der in dieser Schrift offenbarten Ausführungsformen zusammengesetzt zu werden. Es umfasst mindestens eine Aufnahme zur Lagerung einer verstellbaren Leitschaufel. In einem Abschnitt bildet die Aufnahme einen im Wesentlichen ellipsoidisch geformten Aufnahmeraum für einen Leitschaufelkopf einer Leitschaufel aus. Ein erfindungsgemäßes Innenringsegment kann beispielsweise als Halb-, Drittel- oder Viertelring ausgebildet sein, also einen Achsenwinkel (an der zentralen Achse) von 180°, 120° oder 90° aufweisen.

Ein erfindungsgemäßer Innenring bzw. ein erfindungsgemäßes Innenringsegment kann axial geteilt oder ungeteilt sein.

Vorzugsweise umfasst der den im Wesentlichen ellipsoidisch geformten Aufnahmeraum ausbildende Abschnitt eines erfindungsgemäßen Innenrings bzw. Innenringsegments eine (somit ebenfalls im Wesentlichen ellipsoidisch geformte, insbesondere gewölbte) Aufnahmebodenfläche, die einer (dem Gehäuse zugewandte oder zuzuwendende) Öffnung der Aufnahme nach außen radial gegenüber liegt. Analog weist der im Wesentlichen ellipsoidisch ausgebildete Leitschaufelkopf vorzugsweise einen Oberflächenbereich auf, der dem Schaufelblatt gegenüber liegt, der also insbesondere von der Verschwenkungsachse durchstoßen wird und gewölbt ist.

Gemäß einer vorteilhaften Ausführungsform eines erfindungsgemäßen Innenrings bzw. Innenringsegments ist der den im Wesentlichen ellipsoidisch geformten Aufnahmeraum ausbildende Abschnitt einer Aufnahme (bzw. mindestens ein Teil dieses Abschnitts) jeweils im Wesentlichen rotationssymmetrisch zu einer vorgesehenen Verschwenkungsachse einer einzusetzenden Leitschaufel geformt. Entsprechend ist der ellipsoidisch ausgebildete Leitschaufelkopf einer erfindungsgemäßen Leitschaufel vorzugsweise rotationssymmetrisch zu einer vorgesehenen Verschwenkungsachse der Leitschaufel geformt. Auf diese Weise kann ein Zwischenraum zwischen einer Wandung der Aufnahme und einem darin aufgenommenen bzw. gelagerten Leitschaufelkopf optimal klein ausgebildet sein, was eine Leckage in diesem Bereich minimiert.

Das zugehörige Ellipsoid ist somit bei diesen Ausführungsformen von Innenring bzw. Leitschaufel ein Rotationsellipsoid, bei dem zwei Halbachsen mit derselben Länge L jeweils orthogonal zur vorgesehenen Verschwenkungsachse der (einzusetzenden) Leitschaufel liegen. Die dritte, entlang der vorgesehenen Verschwenkungsachse verlaufende Halbachse kann ebenfalls die Länge L haben (so dass das Ellipsoid also eine Kugel ist), oder ihre Länge kann größer sein als die Länge L jeder der orthogonal zur vorgesehenen Verschwenkungsachse liegenden Halbachsen (was eine besonders sichere Lagerung im Innenring bzw. eine besonders enge Anordnung mehrerer Leitschaufeln am Innenring ermöglicht). Schließlich kann die dritte Halbachse eine Länge haben, die kleiner ist als die Länge L; damit kann ein Innenring besonders kleiner radialer Dicke realisiert werden, der somit einen besonders kleinen radialen Bauraum beansprucht.

Der ellipsoidische Aufnahmeraum bzw. der Leitschaufelkopf kann dabei in Richtung der vorgesehenen Verschwenkungsachse eine volle Halbachse umfassen (z.B. als Halbellipsoid oder sogar Halbkugel ausgebildet sein), oder er kann in Richtung der vorgesehenen Verschwenkungsachse eine Höhe aufweisen, die kleiner ist als die sich in diese Richtung erstreckende Halbachse des Ellipsoids.

Gemäß einer vorteilhaften Ausführungsform umfasst ein erfindungsgemäßer Innenring bzw. ein erfindungsgemäßes Innenringsegment in einem radial inneren Bereich mindestens ein Dichtungselement, beispielsweise mindestens einen Einlaufbelag (z.B. in Form einer Honigwabendichtung). Das Dichtungselement kann in dem radial inneren Bereich an dem Innenring (bzw. einem Innenringsegment des Innenrings) befestigt oder monolithisch mit diesem ausgebildet sein.

Eine in den Aufnahmen eines erfindungsgemäßen Innenrings bzw. Innenringsegments vorgesehenen Kontaktfläche, die dazu eingerichtet ist, einen eingesetzten Leitschaufelkopf zu berühren, kann vollständig oder teilweise eine Beschichtung zur Reduktion von Reibungsverlusten und/oder von Verschleiß aufweisen. Analog kann mindestens ein Teil einer Oberfläche des Leitschaufelkopfes einer erfindungsgemäßen Leitschaufel eine Beschichtung zur Reduktion von Reibungsverlusten und/oder von Verschleiß aufweisen. Die ellipsoidische Form ermöglicht hierbei eine besonders gleichmäßige und lange haltbare Beschichtung.

Gemäß einer vorteilhaften Ausführungsform eines erfindungsgemäßen Innenrings bzw. Innenringsegments ist die mindestens eine der einen im Wesentlichen ellipsoidischen Aufnahmeraum ausbildenden Aufnahmen dazu eingerichtet, mit einem entsprechend geeigneten Leitschaufelkopf formschlüssig verbunden zu sein bzw. zu werden, beispielsweise mittels einer bajonettartigen Verbindung. Dazu kann in der Aufnahme z.B. mindestens eine Nut vorgesehen sein, die einen in einer Ebene senkrecht zur Verschwenkungsachse verlaufenden Abschnitt aufweist und die dazu eingerichtet ist, ein radial wirkendes Sicherungselement (z.B. einen Sicherungsstift oder -vorsprung) aufzunehmen, das von dem entsprechend geeigneten Leitschaufelkopf vorzugsweise absteht.

Analog kann eine erfindungsgemäße Leitschaufel dazu eingerichtet sein, mit einem Innenring in einer entsprechenden Aufnahme formschlüssig verbunden zu werden bzw. zu sein, beispielsweise mittels einer Bajonettverbindung. Dazu kann die Leitschaufel ein radial wirkendes Sicherungselement (z.B. einen Sicherungsstift oder -vorsprung) umfassen, das von ihrem im Wesentlichen ellipsoidisch ausgebildeten Leitschaufelkopf (vorzugsweise in einer Richtung senkrecht zur Verschwenkungsachse) absteht. Das Sicherungselement kann monolithisch mit dem Leitschaufelkopf ausgebildet sein oder als Einzelteil mit dem Leitschaufelkopf verbunden, beispielsweise in Form eines durch den Leitschaufelkopf hindurchgeführten Stiftes. Auf diese Weise kann eine besonders solide Verbindung von Innenring und Leitschaufel gewährleistet werden.

Vorteilhaft ist eine Ausführungsform eines erfindungsgemäßen Innenrings bzw. Innenringsegments,
bei der eine den im Wesentlichen ellipsoidisch geformten Aufnahmeraum begrenzende Wandung der Aufnahme mindestens in einem Bereich an die radial äußere Innenringoberfläche angrenzt. In einem die vorgesehene Verschwenkungsachse umfassenden Meridianschnitt längs der zentralen Achse des Innenrings kann dabei ein Übergang von der Innenringoberfläche zur Wandung einen Außenwinkel von 270° umfassen. Alternativ kann die Wandung gegenüber der Innenringoberfläche geneigt sein, so dass sich der genannte Außenwinkel vorzugsweise in einem Bereich von 225° bis 265°, insbesondere von 230° bis 255°: In diesem Fall kann besonders effektiv verhindert werden, dass eine Wiedereinströmung des Leckagemassenstromes normal zur äußeren Innenringoberfläche erfolgt, was eine Störung des Hauptgasstromes und damit zusätzliche Strömungsverluste zur Folge hätte.

Ein erfindungsgemäßer Leitschaufelkranz umfasst einen Innenring und eine Mehrzahl an verstellbaren (also verschwenkbaren) Leitschaufeln. Dabei ist der Innenring gemäß einer der in dieser Schrift offenbarten Ausführungsformen eines erfindungsgemäßen Innenrings ausgebildet, und/oder mindestens eine der Leitschaufeln ist gemäß einer der in dieser Schrift offenbarten Ausführungsformen einer erfindungsgemäßen Leitschaufel ausgebildet. Der Leitschaufelkranz kann für eine Verdichter- oder für eine Turbinenstufe vorgesehen sein.

Der Leitschaufelkopf der mindestens einen Leitschaufel kann ungesichert in der jeweiligen Aufnahme gelagert sein, so dass also die Leitschaufel lediglich durch das Hineinragen ihres Leitschaufelkopfes in die Aufnahme am Innenring fixiert wird. Alternativ kann der Leitschaufelkopf mittels einer Sicherung am Innenring gehalten werden, beispielsweise indem er wie oben beschrieben formschlüssig mit dem Innenring verbunden ist (wobei z.B. die Aufnahme eine Nut und der Leitschaufelkopf ein herausragendes Sicherungselement aufweist wie oben ausgeführt).

Eine erfindungsgemäße Strömungsmaschine umfasst wenigstens eine Verdichter- und/oder Turbinenstufe, die mindestens einen erfindungsgemäßen Leitschaufelkranz gemäß einer der in dieser Schrift offenbarten Ausführungsformen umfasst. Sie kann insbesondere ein Flugtriebwerk sein.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt.

Es zeigen schematisch:
- Figur 1:: einen Abschnitt eines exemplarischen erfindungsgemäßen Leitschaufelkranzes in einem Meridianschnitt;
- Figur 2:: ein Innenringsegment gemäß einer exemplarischen Ausführungsform der vorliegenden Erfindung in einem Meridianschnitt;
- Figur 3a:: einen Abschnitt einer Leitschaufel gemäß einer Ausführungsform der vorliegenden Erfindung;
- Figur 3b: e: einen Abschnitt einer Leitschaufel gemäß einer anderen Ausführungsform der vorliegenden Erfindung; und
- Figur 3c:: einen Abschnitt einer Leitschaufel gemäß einer weiteren Ausführungsform der vorliegenden Erfindung.

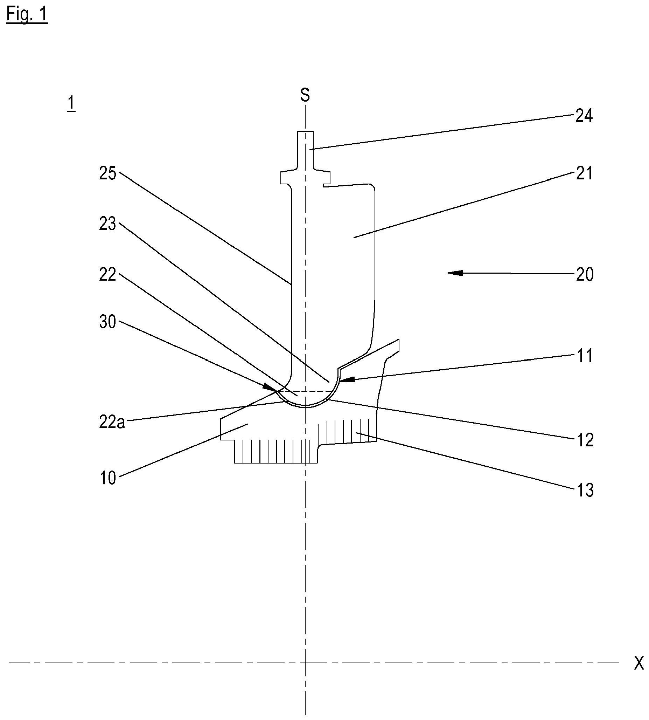

In Figur 1 ist ein Abschnitt eines exemplarischen erfindungsgemäßen Leitschaufelkranzes 1 in einem
Meridianschnitt entlang der zentralen Achse X des Leitschaufelkranzes (bzw. ihres Innenrings 10) dargestellt. Der Meridianschnitt verläuft dabei zudem entlang der vorgesehenen Verschwenkungsachse S einer Leitschaufel 20 des Leitschaufelkranzes 1.

Die dargestellte erfindungsgemäße Leitschaufel 20 umfasst ein Schaufelblatt 21 und einen Leitschaufelkopf 22, der ein (bezogen auf die zentrale Achse X des Leitschaufelkranzes) radial innen positioniertes Ende der Leitschaufel 20 ist. Der Leitschaufelkopf 22 ist ellipsoidisch geformt, hat also einen Oberflächenbereich 22a, der mit der Oberfläche eines Ellipsoids übereinstimmt.

An einer von dem Schaufelblatt abgewandten Seite ragt der Leitschaufelkopf 22 über eine Anströmkante 25 der Leitschaufel hinaus.

Mittels eines Verstellzapfens 24, der dazu eingerichtet ist, in ein (in Figur 1 nicht gezeigtes, eine Verstelleinrichtung aufweisendes) Gehäuse eingesetzt zu werden, ist die Leitschaufel 20 um eine radial zur zentralen Achse X verlaufende Verschwenkungsachse S verschwenkbar.

Der dargestellte erfindungsgemäße Innenring 10 (der aus zwei oder mehr Innenringsegmenten zusammengesetzt sein kann) weist eine Mehrzahl an Aufnahmen für jeweilige Leitschaufeln auf, von denen in der Schnittdarstellung nur die Aufnahme 11 zu sehen ist. Die Aufnahme 11 bildet dabei in einem radial inneren Abschnitt einen ellipsoidisch geformten Aufnahmeraum 12 für den Leitschaufelkopf 22 aus. Im gezeigten Beispiel ist außer dem ellipsoidisch geformten Leitschaufelkopf 22 auch noch ein Übergangsbereich 23 der Leitschaufel in der Aufnahme 11 des Innenrings 10 aufgenommen.

Ein Zwischenraum 30 zwischen Leitschaufelkopf und einer Wandung der Aufnahme (der auch als "Pennyspalt" bezeichnet wird) kann aufgrund der erfindungsgemäßen Lagerung der Leitschaufel 20 mit ihrem im Wesentlichen ellipsoidischen geformten Leitschaufelkopf 22 in der Aufnahme 11 mit dem entsprechend geformten Aufnahmeraum 12 optimal klein konzipiert werden. Diese Lagerung ist zudem kompakt, robust und verschleißarm.

Der zentralen Achse X zugewandt umfasst der Innenring 10 ein Dichtungselement 13, das im gezeigten Beispiel als Honigwabendichtung ausgebildet und monolithisch an den Innenring 10 angeformt ist.

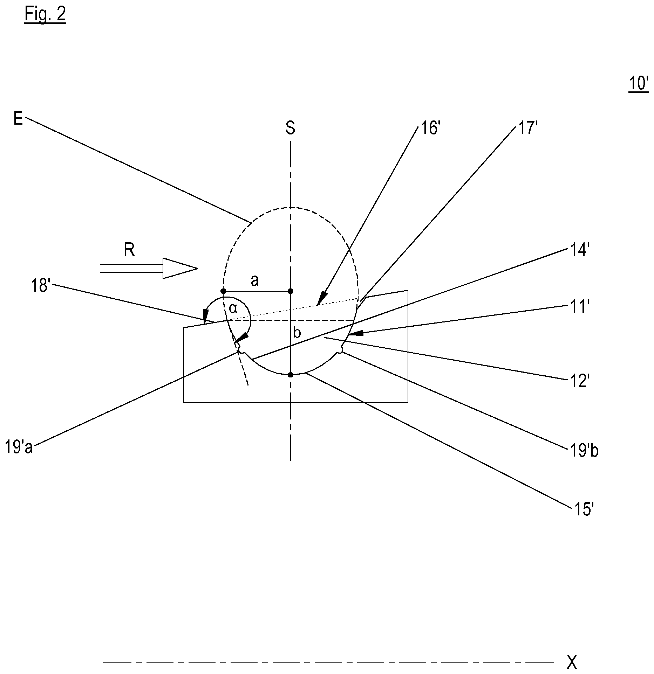

In Figur 2 ist ein erfindungsgemäßes Innenringsegment 10' in einem Meridianschnitt durch eine Aufnahme 11' und entlang einer zentralen Achse X des Innenringsegments 10 (bzw. eines Innenrings, den das Innenringsegment zusammen mit mindestens einem weiteren Innenringsegment bildet) gezeigt. Die Schnittebene umfasst dabei die vorgesehene Verschwenkungsachse S einer in die Aufnahme 11' einzusetzenden (nicht dargestellten) Leitschaufel.

Die Aufnahme 11' bildet einen im Wesentlichen ellipsoidisch geformten Aufnahmeraum 12' für einen Leitschaufelkopf der jeweiligen Leitschaufel aus; der Aufnahmeraum 12' wird durch einen Teil der Oberfläche eines (abstrakten) Ellipsoids E begrenzt, entlang der eine Wandung 14' der Aufnahme verläuft. Die Wandung 14' umfasst insbesondere eine Aufnahmebodenfläche 15', die radial einer (einer einzusetzenden Leitschaufel zugewandten) Öffnung 16' der Aufnahme gegenüberliegt. Außer dem im Wesentlichen ellipsoidischen Aufnahmeraum 12' umfasst die Aufnahme 11' einen weiteren Bereich 17'.

Das Ellipsoid E hat die in der Figur gekennzeichneten Halbachsen a und b sowie eine weitere, senkrecht zur Darstellungsebene verlaufende Halbachse. Vorzugsweise hat diese weitere Halbachse dieselbe Länge wie die Halbachse a, so dass das Ellipsoid E also ein Rotationsellipsoid ist, dessen Rotationssymmetrieachse mit der Verschwenkungsachse S übereinstimmt.

Stromaufwärts einer vorgesehenen Hauptstromrichtung R grenzt die den im Wesentlichen ellipsoidisch geformten Aufnahmeraum 12' begrenzende Wandung 14' an die radial äußere Innenringoberfläche 18' an. Die Wandung 14' ist dabei gegenüber Innenringoberfläche 18' um einen Außenwinkel α geneigt, der kleiner als 270° ist. Dadurch kann verhindert werden, dass eine Wiedereinströmung des Leckagemassenstromes normal zur äußeren Innenringoberfläche erfolgt, was eine Störung des Hauptgasstromes und damit zusätzliche Strömungsverluste zur Folge hätte.

Die Aufnahme 11' des Innenringsegments 10' umfasst ferner zwei Nuten 19'a, 19'b, die jeweils in einem Abschnitt in einer Ebene senkrecht zur vorgesehenen Verschwenkungsachse S verlaufen (in der Schnittdarstellung nicht sichtbar) und dazu eingerichtet sind, jeweils einen Sicherungsvorsprung an dem Leitschaufelkopf einer einzusetzenden (nicht dargestellten) Leitschaufel aufzunehmen. Zum Einsetzen umfassen die beiden Nuten jeweils einen zur Öffnung 16' führenden Abschnitt.

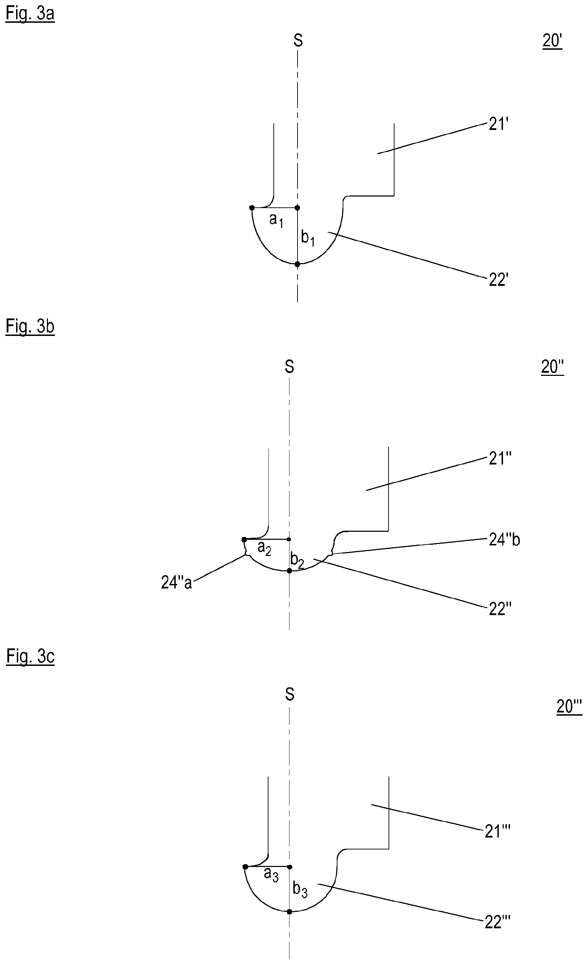

Die Figuren 3a, 3b und 3c zeigen jeweils einen Abschnitt einer erfindungsgemäßen verstellbaren Leitschaufel 20', 20" und 20"' unterschiedlicher Ausführungsformen in einer Schnittebene, welche die vorgesehene Verschwenkungsachse S umfasst. Die Leitschaufeln haben dabei jeweils ein Schaufelblatt 21', 21" bzw. 21"' und einen im Wesentlichen ellipsoidisch geformten Leitschaufelkopf 22', 22" bzw. 22"'. Das zugehörige Ellipsoid ist dabei in diesen Beispielen jeweils ein Halbellipsoid.

In den Figuren sind die in der Schnittebene liegenden Halbachsen aᵢ, bᵢ (i=1, 2, 3) der Ellipsoide eingezeichnet, gemäß denen die Leitschaufelköpfe jeweils geformt sind. Die Halbachsen bᵢ (i=1, 2, 3) verlaufen dabei jeweils in Richtung der vorgesehenen Verschwenkungsachse S. Eine dritte (nicht sichtbare) Halbachse verläuft orthogonal zur Schnittebene. Ihre Länge stimmt vorzugsweise jeweils mit der Länge der entsprechenden Halbachse aᵢ überein, so dass die Ellipsoide dann also jeweils rotationssymmetrisch zur Verschwenkungsachse S sind.
Im in der Figur 3a gezeigten Ausführungsbeispiel ist die Halbachse b₁ länger als die Halbachse Halbachse a₁, der Leitschaufelkopf ist daher dazu eingerichtet, in eine relativ tiefe Aufnahme eines Innenring(segment)s eingesetzt zu werden. Dadurch ist die Lagerung besonders robust.

Bei der in Figur 3b gezeigten Leitschaufel 20" ist hingegen die Halbachse b₂ kürzer als die Halbachse Halbachse a₂. Dies erlaubt eine Lagerung in einem (in radialer Richtung) besonders dünnen Innenring und ist besonders einfach einzufädeln.

Im gezeigten Beispiel weist der Leitschaufelkopf 22" zwei (optional vorhandene) Sicherungselemente 24 "a, 24 "b auf, die vorliegend als Vorsprünge ausgebildet sind und aus dem Leitschaufelkopf hervorragen. Die Sicherungselemente 24"a, 24 "b sind dazu eingerichtet, jeweils in eine geeignete Nut in einer Aufnahme eines Innenrings einzugreifen und so die Leitschaufel ähnlich einer Bajonettverbindung am Innenring zu sichern.

Die Leitschaufel 20"', die in der Figur 3c dargestellt ist, hat einen Leitschaufelkopf, bei dem die Längen der Halbachsen a₃ und b₃ übereinstimmen. Sofern auch die dritte (nicht erkennbare) diese Länge hat, ist der Leitschaufelkopf also als Halbkugel ausgebildet.

Ein erfindungsgemäßer Innenring 10 bzw. ein erfindungsgemäßes Innenringsegment 10' für einen verstellbaren Leitschaufelkranz 1 umfasst eine Mehrzahl an Aufnahmen 11, 11' jeweils zur Lagerung einer verstellbaren Leitschaufel 20, 20', 20", 20'". Die Aufnahmen bilden dabei jeweils einen im Wesentlichen ellipsoidisch geformten Aufnahmeraum 12 für einen Leitschaufelkopf 22, 22', 22", 22" der jeweiligen Leitschaufel aus.

Eine erfindungsgemäße Leitschaufel 20, 20', 20", 20'" für einen verstellbaren Leitschaufelkranz 1 weist ein Schaufelblatt 21, 21', 21", 21"' und einen Leitschaufelkopf 22, 22', 22", 22'" aufweist. Der Leitschaufelkopf ist im Wesentlichen ellipsoidisch ausgebildet und dazu eingerichtet, verschwenkbar in einer Aufnahme 11, 11' eines Innenrings 10 bzw. Innenringsegments 10' des Leitschaufelkranzes 1 aufgenommen zu werden.

### Bezugszeichen

- 1: Leitschaufelkranz
- 10: Innenring
- 10': Innenringsegment
- 11, 11': Aufnahme
- 12, 12': Aufnahmeraum
- 13: Dichtungselement
- 14': Wandung
- 15': Aufnahmebodenfläche
- 16': Öffnung
- 17': weiterer Bereich der Aufnahme
- 18': radial äußere Innenringoberfläche
- 19'a, 19'b: Nuten in der Aufnahme

- 20, 20', 20", 20"': Leitschaufel
- 21, 21', 21", 21'": Schaufelblatt
- 22, 22', 22", 22"': Leitschaufelkopf
- 22a: Oberflächenbereich des Leitschaufelkopfs
- 23: Übergangsbereich
- 24: Verstellzapfen
- 25: Anströmkante

- 30: Zwischenraum zwischen Wandung der Aufnahme und Leitschaufelkopf ("Pennyspalt")

- a, aᵢ, b, bᵢ: (i = 1, 2, 3) Halbachsen
- E: Ellipsoid
- S: Verschwenkungsachse
- X: zentrale Achse des Leitschaufelkranzes bzw. Innenring(segment)s

- α: Winkel zwischen radial äußerer Innenringoberfläche und Wandung der Aufnahme im Meridianschnitt

## Patentansprüche

1. Innenring (10) für einen verstellbaren Leitschaufelkranz, wobei der Innenring eine Mehrzahl an Aufnahmen (11, 11') jeweils zur Lagerung einer verstellbaren Leitschaufel aufweist, wobei die Aufnahmen jeweils einen im Wesentlichen ellipsoidisch geformten Aufnahmeraum (12) für einen Leitschaufelkopf der jeweiligen Leitschaufel ausbilden.

2. Innenring (10) gemäß Anspruch 1, wobei der im Wesentlichen ellipsoidisch geformte Aufnahmeraum der Aufnahmen jeweils im Wesentlichen rotationssymmetrisch zu einer radial verlaufenden Achse geformt ist.

3. Innenring (10) gemäß einem der Ansprüche 1 oder 2, der in axialer Richtung und/oder in Umfangsrichtung geteilt ist.

4. Innenring (10) gemäß einem der vorhergehenden Ansprüche, wobei mindestens ein Teil einer in den Aufnahmen (11, 11') vorgesehenen Kontaktfläche des Innenrings mit einem Leitschaufelkopfbereich einer Leitschaufel eine Beschichtung zur Reduktion von Reibungsverlusten und/oder von Verschleiß aufweist.

5. Innenringsegment (10') für einen Innenring gemäß einem der vorhergehenden Ansprüche, wobei das Innenringsegment mindestens eine der Aufnahmen (11, 11') enthält, die einen im Wesentlichen ellipsoidisch geformten Aufnahmeraum (12) für einen Leitschaufelkopf einer Leitschaufel ausbildet.

6. Leitschaufel (20, 20', 20", 20'") für einen verstellbaren Leitschaufelkranz, die ein Schaufelblatt (21, 21', 21", 21'") und einen Leitschaufelkopf (22, 22', 22", 22'") aufweist, wobei der Leitschaufelkopf dazu eingerichtet ist, verschwenkbar in einer Aufnahme eines Innenrings bzw. Innenringsegments des Leitschaufelkranzes aufgenommen zu werden, und wobei der Leitschaufelkopf (22, 22', 22", 22'") im Wesentlichen ellipsoidisch ausgebildet ist.

7. Leitschaufel (20, 20', 20", 20"') gemäß Anspruch 6, wobei der ellipsoidisch ausgebildete Leitschaufelkopf (22, 22', 22", 22'") rotationssymmetrisch zu einer vorgesehenen Verschwenkungsachse der Leitschaufel geformt ist.

8. Leitschaufel (20, 20', 20", 20"') gemäß einem der Ansprüche 6 oder 7, wobei mindestens ein Teil einer Oberfläche des Leitschaufelkopfes (22, 22', 22", 22'") eine Beschichtung zur Reduktion von Reibungsverlusten und/oder von Verschleiß aufweist.

9. Leitschaufelkranz (1) mit einem Innenring (10) und einer Mehrzahl an verstellbaren Leitschaufeln (20, 20', 20", 20'"), wobei der Innenring gemäß einem der Ansprüche 1 bis 4 und/oder wobei mindestens eine der Leitschaufeln gemäß einem der Ansprüche 6 bis 8 ausgebildet ist.

10. Strömungsmaschine mit wenigstens einer Verdichter- und/oder Turbinenstufe, die einen Leitschaufelkranz (1) gemäß Anspruch 9 umfasst.
